Europäisches Patentamt

European Patent Office

Office européen des brevets

(11) Publication number: **0 258 450 B1**

(12) **EUROPEAN PATENT SPECIFICATION**

(45) Date of publication of patent specification: **16.12.92** (51) Int. Cl.⁵: **G11B 7/09**

(21) Application number: **87901639.2**

(22) Date of filing: **18.02.87**

(86) International application number:
**PCT/JP87/00105**

(87) International publication number:
**WO 87/05142 (27.08.87 87/19)**

(54) **DEVICE FOR DETECTING FOCUS.**

(30) Priority: **24.02.86 JP 38576/86**
**31.05.86 JP 126318/86**

(43) Date of publication of application:
**09.03.88 Bulletin 88/10**

(45) Publication of the grant of the patent:
**16.12.92 Bulletin 92/51**

(84) Designated Contracting States:
**DE FR GB NL**

(56) References cited:
**EP-A- 0 199 565**
**DE-A- 3 132 818**
**JP-A- 5 233 549**
**JP-A-60 217 535**

(73) Proprietor: **SONY CORPORATION**
**7-35 Kitashinagawa 6-chome Shinagawa-ku**
**Tokyo 141(JP)**

(72) Inventor: **YOSHITOSHI, You Sony Corporation**
**7-35, Kitashinagawa 6-chome**
**Shinagawa-ku Tokyo 141(JP)**
Inventor: **MATSUMOTO, Yoshiyuki Sony Cor-**
**poration**
**7-35, Kitshinagawa 6-chome**
**Shinagawa-ku Tokyo 141(JP)**
Inventor: **KUME, Hidehiro Sony Corporation**
**7-35, Kitashinagawa 6-chome Shinagawa-ku**
**Tokyo 141(JP)**

(74) Representative: **Thomas, Christopher Hugo et**
**al**
**D Young & Co 10 Staple Inn**
**London WC1V 7RD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a focusing detection apparatus.

A focusing error signal representing a focusing state of a laser beam on an optical recording medium requires zero-crossing point symmetry, linearity near the zero-crossing point, and elimination of reproduced signal mixing.

Our Japanese patent specification (kokai) JP-60/217535 discloses a focusing detection apparatus 10, shown in accompanying Figure 1A, which satisfies the above requirements.

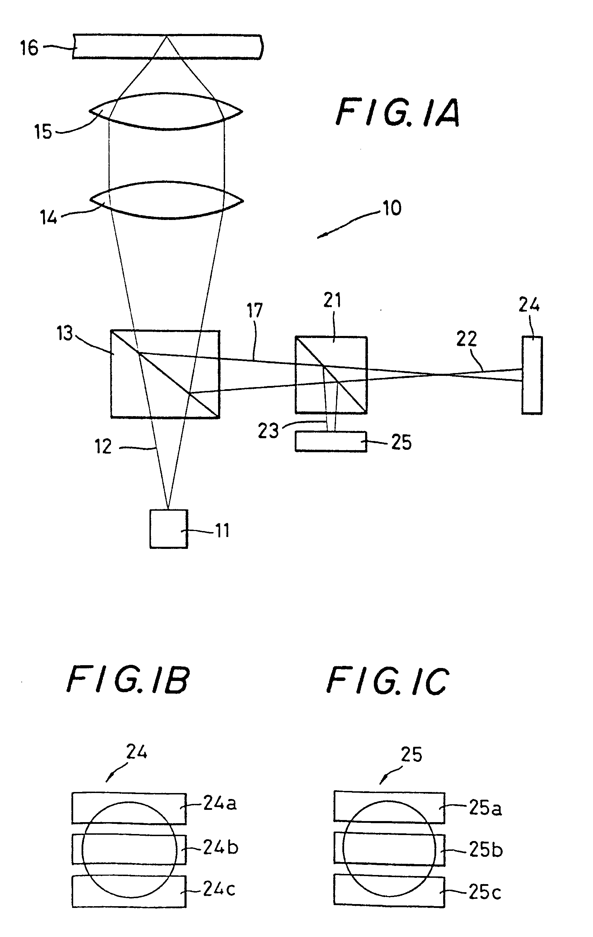

In the apparatus 10, a beam 12 from a light source 11 such as a laser diode is transmitted through a beam splitter 13, a collimator lens 14, and an objective lens 15, and is incident on an optical recording medium 16 such as an optical disc. A beam is reflected by the recording medium 16, is transmitted through the objective lens 15 and the collimator lens 14, and is reflected by the beam splitter 13. A beam 17 from the beam splitter 13 is split into first and second beams 22 and 23 by a beam splitter 21. A first photosensor 24 is spaced apart from the recording medium 16 by a distance longer than that between the recording medium 16 and a convergent point of the first beam 22. A second photosensor 25 is spaced apart from the recording medium 16 by a distance shorter than that between the recording medium 16 and a convergent point of the second beam 23. As shown in Figures 1B and 1C, a sum of detection signals from end photosensor elements 24a and 24c of the first photosensor 24 and a central photosensor element 25b of the second photosensor 25 is compared with a sum of detection signals from a central photosensor element 24b of the first photosensor 24 and end photosensor elements 25a and 25c of the second photosensor 25 to obtain a focusing error signal.

In the apparatus 10, the two beam splitters 13 and 21 are used. In addition, the light source 11, the beam splitters 13 and 21, and the photosensors 24 and 25 are independently arranged, which complicates the assembly, thus resulting in a bulky, expensive apparatus.

Attention is also drawn to our European patent specification EP-A2-0 199 565 published 29 October 1986 (EPC Article 54(3) and (4)) which discloses a semiconductor laser apparatus comprising a prism and having some features in common with the apparatus claimed in the present application.

According to the present invention there is provided a focusing detection apparatus comprising:

a semiconductor laser fixed on a semiconductor substrate;

a prism fixed on said substrate and comprising a first semi-transmissible reflecting surface inclinedly facing said laser, a second semi-transmissible reflecting surface in contact with said substrate, and a third reflecting surface opposite to said second surface;

a first photosensor including three photosensor elements aligned in a predetermined direction and formed on said substrate in contact with said second surface to receive light passing through said first surface; and

a second photosensor including three photosensor elements aligned in a predetermined direction and formed on said substrate in contact with said second surface to receive light passing through said first surface and reflected by said second and said third surfaces;

wherein:

an optical recording medium can be irradiated by a light beam emitted by said laser and reflected by said first surface;

a light beam reflected from the recording medium and passed through said first surface converges after it has been reflected by said second surface but before it is incident on said second photosensor; and

a sum of detection signals from end photosensor elements of said first photosensor and a central photosensor element of said second photosensor is compared with that from a central photosensor element of said first photosensor and end photosensor elements of said second photosensor to produce a focusing error signal for the recording medium.

The invention will now be described by way of example with reference to the accompanying drawings, throughout which like parts are referred to by like references, and in which:

Figure 1A is a side view of a previously proposed apparatus;

Figures 1B and 1C are plan views of photosensors in the apparatus of Figure 1A;

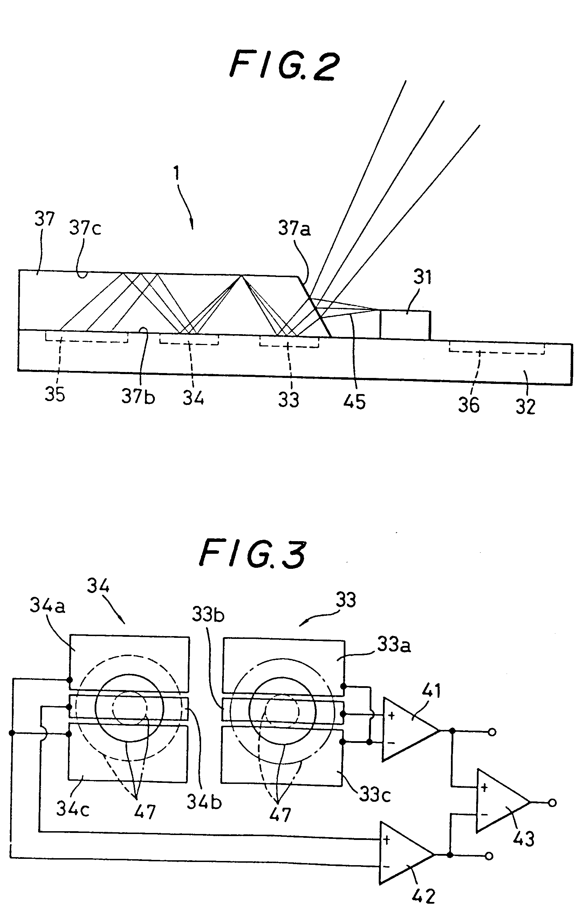

Figure 2 is a side view of a first embodiment of the present invention;

Figure 3 is a schematic view of photosensors and a circuit in the first embodiment;

Figure 4 is a side view of an application of the first embodiment;

Figure 5 is a graph of signals produced by the circuit of Figure 3;

Figures 6 and 7 are side views of second and third embodiments respectively of the present invention;

Figure 8 is a plan view of a fourth embodiment of the present invention;

Figure 9 is a side sectional view of an optical head to which a fifth embodiment of the present invention is applied;

Figure 10 is an exploded perspective view of the optical head of Figure 9; and

Figures 11 and 12 are a side view and a front view respectively of the fifth embodiment.

In the first embodiment of focusing detection apparatus 1 shown in Figure 1, a laser diode 31 is fixed on a silicon substrate 32 by tin soldering or the like. Photosensors 33 to 36 comprising photodiodes are formed on the substrate 32. A prism 37 made of BK7 and having a trapezoidal sectional shape is fixed on the photosensors 33 to 35 with an adhesive, thus constituting a hybrid integrated apparatus as the apparatus 1.

A surface 37a of the prism 37 on the side opposite to the laser diode 31 and a portion of a surface 37b in contact with the substrate 32 except for a portion near the photosensor 35 are semi-transmissible reflecting surfaces. A surface 37c opposite to the surface 37b is a reflecting surface.

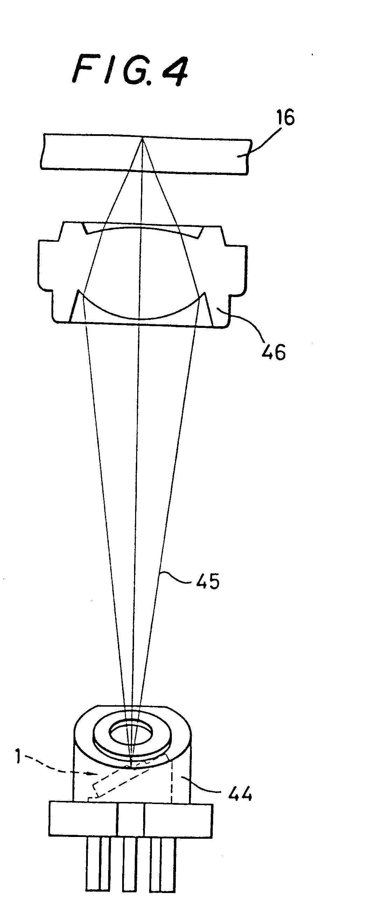

The photosensors 33 and 34 respectively comprise three photosensor elements 33a to 33c aligned in a predetermined direction and three photosensor elements 34a to 34c aligned in a predetermined direction, as shown in Figure 3. The photosensor elements 33a to 33c and 34a to 34c are connected to operational amplifiers 41 to 43.

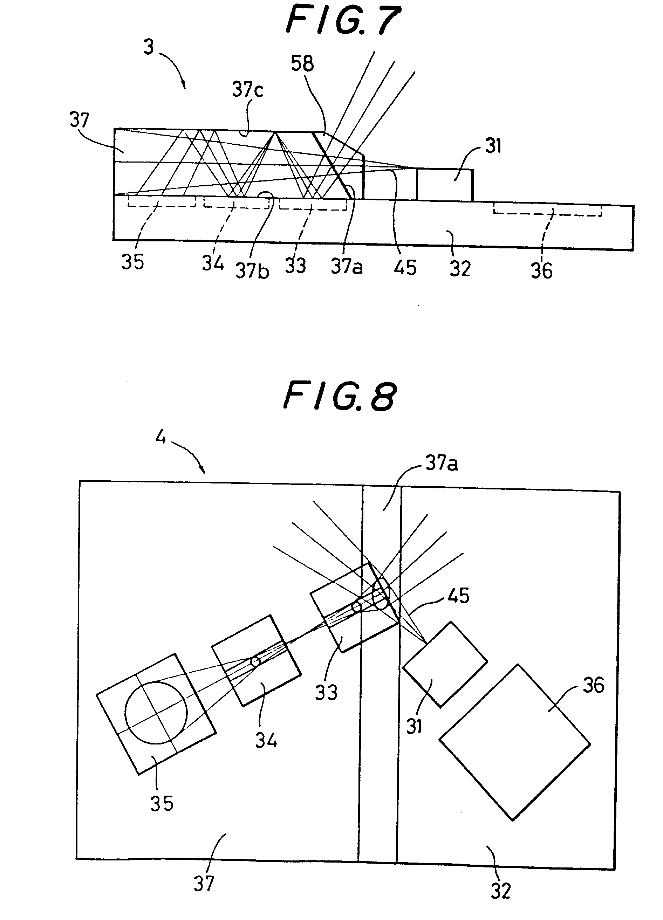

The photosensor 35 comprises four photosensor elements arranged as shown in Figure 8, and is used for tracking detection. The photosensor 36 is used for automatic power control of the laser diode 31.

The apparatus 1 is sealed in a cap 44, as shown in Figure 4.

In the apparatus 1 of the first embodiment, part of the beam 45 emitted from the laser diode 31 is reflected by the surface 37a and passes through an objective lens 46 having a predetermined magnification to be incident on an optical recording medium 16.

Part of the beam 45 reflected by the recording medium 16 passes through the objective lens 46 and the surface 37a to be incident on the surface 37b. Since the portion of the surface 37b near the photosensor 33 is a semi-transmissible reflecting surface, part of the beam 45 is incident on the photodetector 33, and a remaining part is reflected by the surface 37b. This part is reflected by the surface 37c and is incident again on the surface 37b. A part is therefore incident on the photosensor 34, while the remaining part is reflected by the surfaces 37b and 37c to be incident on the photosensor 35.

In the apparatus 1 of the first embodiment, the size and properties of the prism 37 are determined such that a point conjugate with a convergent point of the beam 45 is located on the surface 37c when the recording medium 16 is located at the convergent point of the beam 45.

As shown in Figure 3, spots 47 of the beam 45 on the photosensors 33 and 34 have the same size when the recording medium 16 is located at the convergent point of the beam 45. When the recording medium 16 deviates from the convergent point of the beam 45, one spot 47 becomes larger and the other spot 47 becomes smaller.

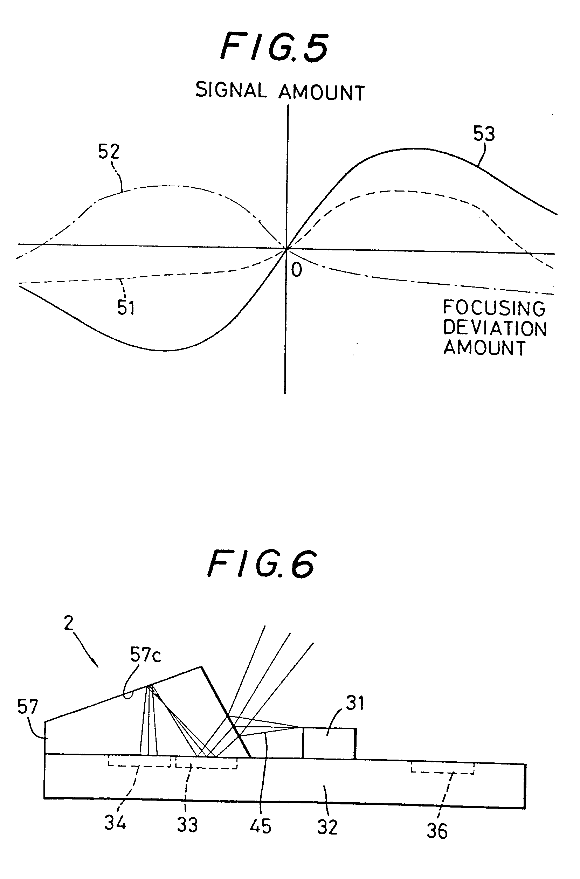

As a result, the operational amplifiers 41, 42 and 43 generate signals indicated by curves 51, 52 and 53 respectively, in Figure 5. Therefore, when a signal from the operational amplifier 43 is used as a focusing error signal, the signal has good characteristics in terms of zero-crossing point symmetry, linearity near the zero-crossing point, and elimination of reproduced signal mixing.

Figure 6 shows the second embodiment of focusing detection apparatus 2, which is substantially the same as the apparatus 1, except that a prism 57 does not have a trapezoidal sectional shape and the beam 45 is not focused on a surface 57c thereof. The effect of this is that even if a small scratch occurs on the portion of the surface 57c which reflects the beam 45, the beam 45 is not adversely affected, and focusing detection can be stably performed.

Figure 7 shows the third embodiment of focusing detection apparatus 3, which is substantially the same as the apparatus 1, except that a prism 58 made of the same material as the prism 37, is arranged in tight contact with the surface 37a of the prism 37, so that the beam 45 emitted from the laser diode 31 towards the surface 37a is incident perpendicularly on a surface of the prism 58, and the part of the beam 45 reflected by the surface 37a is emitted perpendicularly from a surface of the prism 58, so as to propagate without refraction. For this reason, only a small amount of stray light is incident on the photosensors 33 to 35, and focusing detection can be performed with high sensitivity.

Figure 8 shows the fourth embodiment of focusing detection apparatus 4, which is substantially the same as the apparatus 1, except that a line connecting the laser diode 31 and the photosensor 36 crosses a line connecting the photosensors 33 to 35. In the apparatus 4, the beam 45 emitted from the laser diode 31 and passing through the surface 37a is not directed towards the photosensors 33 to 35, and little stray light is incident on the photosensors 33 to 35.

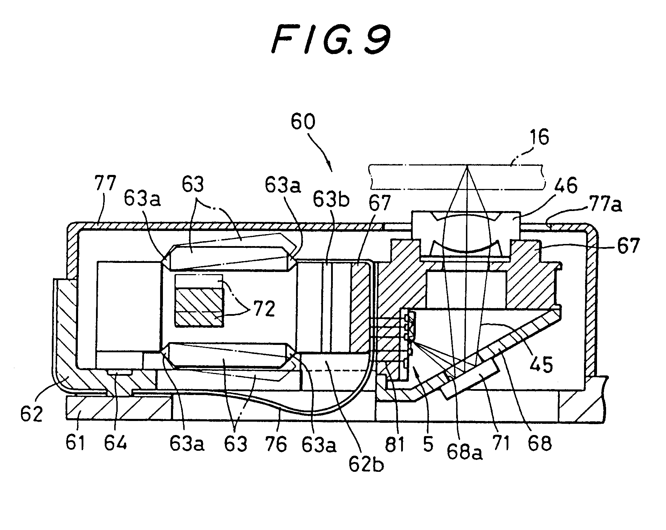

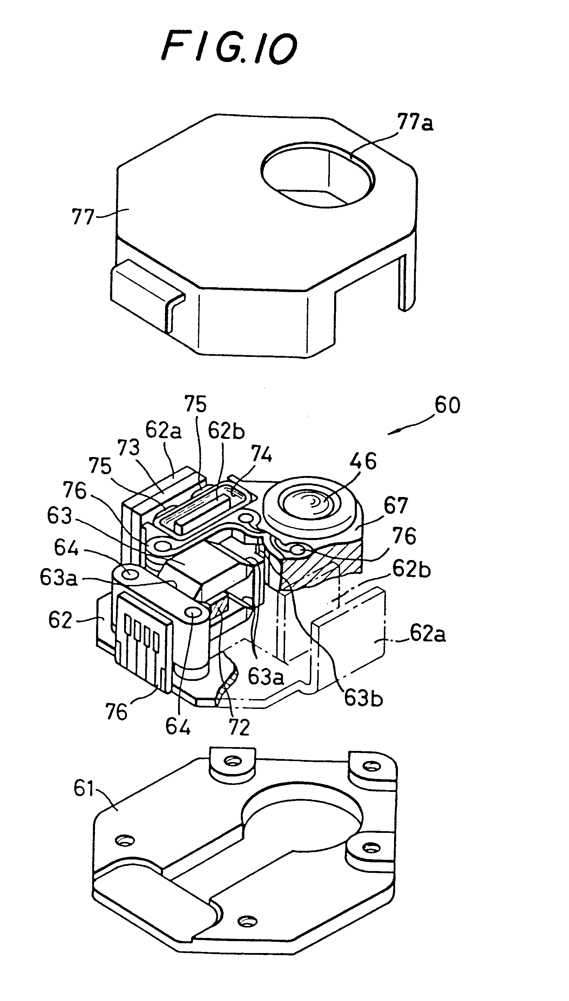

Figures 9 and 10 show an optical head 60 to which a fifth embodiment is applied. In the optical head 60, a plate-like yoke member 62 is mounted on a base 61, and a moulded hinge member 63 is mounted on the yoke member 62 through a pin 64. A holding member 67 holds an objective lens 46, and a focusing detection apparatus 5 forming the fifth embodiment is mounted on the distal end of the hinge member 63. The objective lens 46 has a predetermined magnification such that an object-image distance is 14mm. A cover 68 having an opening 68a is stuck to the holding member 67. A mirror 71 is stuck to the cover 68 to close the opening 68a. The space in the holding member 67 in which the focusing detection apparatus 5 is located is kept air-tight by the holding member 67, the objective lens 46, the cover 68 and the mirror 71.

The hinge member 63 comprises a hinge 63a for causing the holding ember 67 to swing in an optical axis of the objective lens 46, as indicated by the alternate long and short dashed line of Figure 9 so as to perform focusing control, and hinges 63b for causing the holding ember 67 to swing in a direction perpendicular to the optical axis of the objective lens 46 so as to perform tracking control.

A counterweight 72 is mounted on the holding member 67 at a position opposite to the objective lens 46 with respect to the hinges 63b so as to prevent pivotal movement of the holding member 67 about the hinges 63b due to its weight, when the optical head 60 as a whole is inclined.

Vertical bent portions 62a and 62b are formed in the yoke member 62, and magnets 73 are mounted on surfaces of the vertical bent portions 62a at positions opposite to the corresponding vertical bent portions 62b. Focusing coils 74 are mounted in the holding member 67 so as to surround the vertical bent portions 62b. Tracking coils 75 are mounted on the focusing coils 74 so as to oppose the magnets 73.

It should be noted that the pair of vertical bent portions 62a, the pair of vertical bent portions 62b, the pair of magnets 73, the pair of focusing coils 74, and the pair of tracking coils 75 are mounted at positions symmetrical about the hinge member 63.

One end of a flexible wiring board 76 is fixed to the surface of the holding member 67 on the side opposite to the yoke member 62. The flexible wiring board 76 extends through the notched portion of the holding member 67 and is parallel to the optical axis of the objective lens 46. The flexible wiring board 76 further extends at the side of the base 61 of the yoke member 62 and reaches a position to become parallel to the pin 64.

The hinge member 63, the holding member 67, and the like are covered by the cap 77 having an opening 77a located at a position corresponding to the objective lens 46.

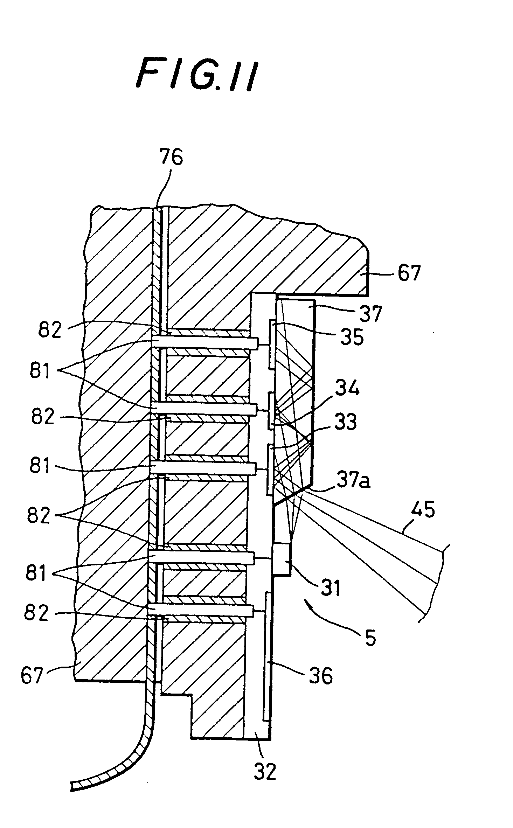

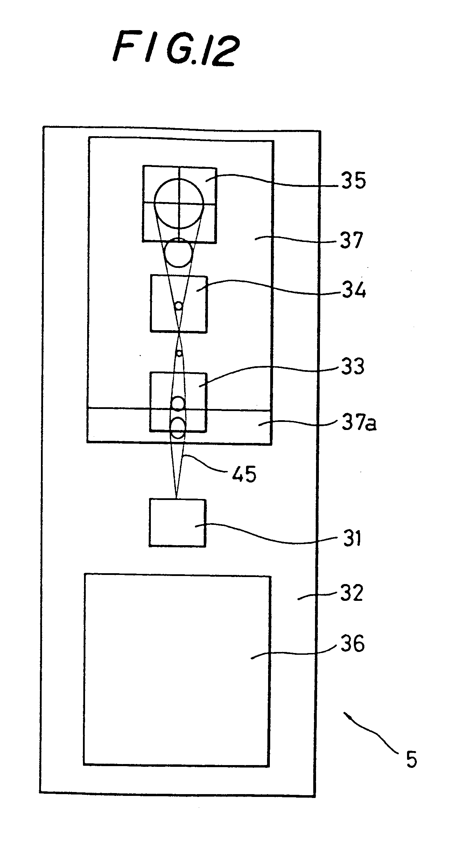

Figures 11 and 12 show the detailed structure of the apparatus 5 and its peripheral portions. The apparatus 5 has substantially the same arrangement as the apparatus 1 of the first embodiment. The laser diode 31 of the focusing detection apparatus 5 is fixed on the silicon substrate 32, the photosensors 33 to 36 are formed on the substrate 32, and the prism 37 is fixed on the photosensors 33 to 35, thus constituting a hybrid integrated apparatus.

The laser diode 31 and the photosensors 33 to 36 are electrically connected to corresponding pins 81 by wire bonding. The pins 81 extend through the wall surface of the holding member 67 while the pins 81 are kept insulated from a holding member 67 by glass 82. The distal ends of the pins 81 are connected to the flexible wiring board 76.

In the optical head having the arrangement described above, the beam 45 emitted from the laser diode 31 and reflected by the surface 37a of the prism 37 is further reflected by the mirror 71. The reflected beam passes through the objective lens 46 and is focused on the recording surface of the optical recording medium 16.

The beam 45 reflected by the recording surface of the recording medium 16 traces the optical path in the opposite direction and reaches the surface 37a of the prism 37. The beam 45 incident from the surface 37a on the prism 37 is reflected within the prism 37 and is finally incident on the photosensors 33 to 35.

The beam 45 in the prism 37 is focused on an optical path between the photosensors 33 and 34. A differential output from the photosensors 33 and 34 is supplied as a focusing error signal to the focusing coils 74.

An output difference between the diagonal sums of the photosensor 35 is supplied as a tracking error signal to the tracking coils 75. A sum of outputs from the photosensors 33 to 35 is used as an RF signal.

Since the objective lens 46 has a predetermined magnification in the optical head 60 having the arrangement described above, a collimator lens can be omitted. In addition, the signal focusing detection apparatus 5 can perform both light emission and light reception. Therefore, the number of components can be reduced.

The optical head 60 is compact and lightweight since it requires a small number of components, which means easy assembly, reduced cost of components, and a low adjustment cost.

Furthermore, since the light-emitting and light-receiving portions are arranged in the single focusing detection apparatus 5, the holding member 67 of the objective lens 46 serves as a package for the focusing detection apparatus 5, thereby further reducing the cost of the optical head 60.

Since the optical head 60 is compact and lightweight, a wide servo range can be obtained, and high performance of the optical head can be achieved.

**Claims**

1. A focusing detection apparatus comprising:
a semiconductor laser (31) fixed on a semiconductor substrate (32);
a prism (37) fixed on said substrate (32) and comprising a first semi-transmissible reflecting surface (37a) inclinedly facing said laser (31), a second semi-transmissible reflecting surface (37b) in contact with substrate (32), and a third reflecting surface (37c) opposite to said second surface (37b);
a first photosensor (33) including three photosensor elements (33a, 33b, 33c) aligned in a predetermined direction and formed on said substrate (32) in contact with said second surface (37b) to receive light passing through said first surface (37a); and
a second photosensor (34) including three photosensor elements (34a, 34b, 34c) aligned in a predetermined direction and formed on said substrate (32) in contact with said second surface (37b) to receive light passing through said first surface (37a) and reflected by said second and said third surfaces (37b, 37c);
wherein:
an optical recording medium (16) can be irradiated by a light beam (45) emitted by said laser (31) and reflected by said first surface (37a);
a light beam reflected from the recording medium (16) and passed through said first surface (37a) converges after it has been reflected by said second surface (37b) but before it is incident on said second photosensor (34); and
a sum of detection signals from end photosensor elements (33a, 33c) of said first photosensor (33) and a central photosensor element (34b) of said second photosensor (34) is compared with that from a central photosensor element (33b) of said first photosensor (33) and end photosensor elements (34a, 34b) of said second photosensor (34) to produce a focusing error signal for the recording medium (16).

2. Apparatus according to claim 1 wherein the predetermined direction along which said three photosensor elements (33a, 33b, 33c) of said first photosensor (33) are aligned is the same as the predetermined direction along which said three photosensor elements (34a, 34b, 34c) of said second photosensor (34) are aligned.

3. Apparatus according to claim 2 wherein said three photosensor elements (33a, 33b, 33c) of said first photosensor (33) are respectively arranged adjacent to said three photosensor elements (34a, 34b, 34c) of said second photosensor (34).

4. Apparatus according to claim 1, claim 2 or claim 3 wherein said apparatus is sealed in a cap (44).

5. Apparatus according to claim 1, claim 2 or claim 3 wherein said apparatus is sealed in a holding member (67) for holding an objective lens (46) therein.

6. Apparatus according to claim 5 wherein said objective lens (46) held in said holding member (67) and a cover (68) mounted on said holding member (67) seal said apparatus.

7. Apparatus according to claim 6 wherein a mirror (71) is mounted on said cover (68).

8. Apparatus according to claim 7 wherein said mirror (71) is inclined at a predetermined angle with respect to an optical axis of said objective lens (46).

9. Apparatus according to claim 5 wherein said holding member (67) is movable along a focusing direction.

10. Apparatus according to claim 5 or claim 9 wherein said holding member (67) is movable along a tracking direction.

**Patentansprüche**

1. Fokus-Detektorvorrichtung mit:
einem Halbleiterlaser (31), der auf einem Halbleitersubstrat (32) angebracht ist;
einem auf diesem Substrat (32) angebrachten Prisma (37), das eine erste halbdurchlässige reflektierende Oberfläche (37a) hat, die zu dem Laser (31) geneigt angeordnet ist, eine zweite halbdurchlässige reflektierende Oberfläche (37b) hat, die mit diesem Substrat (32) in Berührung ist, und eine dritte reflektierende Oberfläche (37c) hat, die der zweiten Oberfläche (37b) gegenüberliegend angeordnet ist;
einem ersten Photosensor (33), der drei Photosensorelemente (33a,33b,33c) hat, die in einer vorgegebenen Richtung ausgerichtet sind und auf dem Substrat (32) in Berührung mit dieser zweiten Oberfläche (37b) ausgeführt sind, um Licht zu empfangen, das durch die erste Oberfläche (37a) hindurchgetreten ist; und
einem zweiten Photosensor (34), der drei Photosensorelemente (34a,34b,34c) hat, die in einer vorgegebenen Richtung ausgerichtet sind und auf dem Substrat (32) in Berührung mit der zweiten Oberfläche (37b) ausgebildet sind, um Licht zu empfangen, das durch diese erste Oberfläche (37a) hindurchgetreten ist und von der zweiten und der dritten Oberfläche (37b,37c) reflektiert worden ist; wobei

ein optisches Aufzeichnungsmittel (16) durch einen Lichtstrahl (45) bestrahlt werden kann, der von dem Laser (31) ausgesandt und von der ersten Oberfläche (37a) reflektiert worden ist;

ein von dem Aufzeichnungsmittel (16) reflektierter Lichtstrahl, der durch die erste Oberfläche (37a) hindurchgetreten ist, nach Reflexion an der zweiten Oberfläche (37b), jedoch vor Einfall in den zweiten Photosensor (34), konvergiert; und

eine Summe von Detektorsignalen von End-Photosensorelementen (33a,33c) des ersten Photosensors (33) und von einem zentralen Photosensorelement (34b) des zweiten Photosensors (34) verglichen wird mit derjenigen eines zentralen Photosensorelementes (33b) des ersten Photosensors (33) und End-Photosensorelementen (34a,34b) des zweiten Photosensors (34), um ein Fokus-Fehlersignal für das Aufzeichnungsmittel (16) zu erzeugen.

2. Vorrichtung nach Anspruch 1,
wobei die vorgegebene Richtung, entlang der diese drei Photosensorelemente (33a,33b,33c) des ersten Photosensors (33) ausgerichtet sind, dieselbe ist, wie die vorgegebene Richtung, entlang derer die drei Photosensorelemente (34a,34b,34c) des zweiten Photosensors (34) ausgerichtet sind.

3. Vorrichtung nach Anspruch 2,
wobei diese drei Photosensorelemente (33a,33b,33c) des ersten Photosensors (33) jeweils benachbart den drei Photosensorelementen (34a,34b,34c) des zweiten Photosensors (34) angeordnet sind.

4. Vorrichtung nach Anspruch 1, 2 oder 3,
wobei die Vorrichtung in einer Kapsel (44) eingeschlossen ist.

5. Vorrichtung nach Anspruch 1, 2 oder 3,
wobei diese Vorrichtung in einer Halteeinrichtung (67) eingeschlossen ist, die dazu dient, darin eine Objektivlinse (46) zu haltern.

6. Vorrichtung nach Anspruch 5,
wobei diese Objektivlinse (46) in der Halteeinrichtung (67) gehalten ist und eine Abdeckung (68), die auf der Halteeinrichtung (67) befestigt ist, die Vorrichtung abschließt.

7. Vorrichtung nach Anspruch 6,

wobei ein Spiegel (71) auf dieser Abdeckung (68) angebracht ist.

8. Vorrichtung nach Anspruch 7,
worin dieser Spiegel (71) in einem vorgegebenen Winkel in Bezug auf eine optische Achse der Objektivlinse (46) geneigt positioniert ist.

9. Vorrichtung nach Anspruch 5,
worin diese Halteeinrichtung (67) in einer Fokussierrichtung bewegbar ist.

10. Vorrichtung nach Anspruch 5 oder 9,
worin diese Halteeinrichtung (67) entlang einer Spurrichtung bewegbar ist.

**Revendications**

1. Dispositif de détection de focalisation comprenant :
un laser semiconducteur (31) fixé sur un substrat semiconducteur (32) ;
un prisme (37) fixé sur ledit substrat (32) et comprenant une première surface réfléchissante transmissible (37a) qui est inclinée de manière à faire face audit laser (31), une seconde surface réfléchissante semi-transmissible (37b) en contact avec ledit substrat (32) et une troisième surface réfléchissante (37c) opposée à ladite seconde surface (37b) ;
un premier photodétecteur (33) incluant trois éléments de photodétecteur (33a, 33b, 33c) alignés suivant une direction prédéterminée et formés sur ledit substrat (32) de manière à être en contact avec ladite seconde surface (37b) pour recevoir de la lumière qui traverse ladite première surface (37) ; et
un second photodétecteur (34) incluant trois éléments de photodétecteur (34a, 64b, 64c) alignés suivant une direction prédéterminée et formés sur ledit substrat (32) de manière à être en contact avec ladite seconde surface (37b) pour recevoir de la lumière qui traverse ladite première surface (37a) et qui est réfléchie par lesdites seconde et troisième surfaces (37b, 37c) ;
dans lequel :
un support d'enregistrement optique (16) peut être irradié par un faisceau de lumière (45) émis par ledit laser (31) et réfléchi par ladite première surface (37a) ;
un faisceau de lumière réfléchi depuis le support d'enregistrement (16) et qui traverse ladite première surface (37a) converge après qu'il est réfléchi par ladite seconde surface (37b) mais avant qu'il n'arrive en incidence sur ledit second photodétecteur (34) ; et
une somme de signaux de détection en provenance d'éléments de photodétecteur d'extrémité (33a, 33c) dudit premier photodétecteur (33) et d'un élément de photodétecteur central (34b) dudit second photodétecteur (34) est comparée à la somme de signaux de détection en provenance d'un élément de photodétecteur central (33b) dudit premier photodétecteur (33) et d'éléments de photodétecteur d'extrémité (34a, 34c) dudit second photodétecteur (34) pour produire un signal d'erreur de focalisation pour le support d'enregistrement (16).

2. Dispositif selon la revendication 1, dans lequel la direction prédéterminée selon laquelle lesdits trois éléments de photodétecteur (33a, 33b, 33c) dudit premier photodétecteur (33) sont alignés est la même que la direction prédéterminée selon laquelle lesdits trois éléments de photodétecteur (34a, 34b, 34c) dudit second photodétecteur (34) sont alignés.

3. Dispositif selon la revendication 2, dans lequel lesdits trois éléments de photodétecteur (33a, 33b, 33c) dudit premier photodétecteur (33) sont respectivement agencés de manière à être adjacents auxdits trois éléments de photodétecteur (34a, 34b, 34c) dudit second photodétecteur (34).

4. Dispositif selon la revendication 1, 2 ou 3, dans lequel ledit dispositif est scellé dans un capot (44).

5. Dispositif selon la revendication 1, 2 ou 3, dans lequel ledit dispositif est scellé dans un élément de support (67) destiné à supporter une lentille d'objectif (46) à l'intérieur.

6. Dispositif selon la revendication 5, dans lequel ladite lentille d'objectif (46) maintenue dans ledit élément de support (67) et un couvercle (68) monté sur ledit élément de support (67) rendent étanche ledit dispositif.

7. Dispositif selon la revendication 6, dans lequel un miroir (71) est monté sur ledit couvercle (68).

8. Dispositif selon la revendication 7, dans lequel ledit miroir (71) est incliné selon un angle prédéterminé par rapport à un axe optique de ladite lentille d'objectif (46).

9. Dispositif selon la revendication 5, dans lequel ledit élément de support (67) est mobile selon une direction de focalisation.

10. Dispositif selon la revendication 5 ou 9, dans lequel ledit élément de support (67) est mobile selon une direction de suivi de piste.

FIG. IA

FIG. IB

FIG. IC

# FIG.2

# FIG.3

# FIG.4

# FIG.5

SIGNAL AMOUNT

52

53

51

0

FOCUSING
DEVIATION
AMOUNT

# FIG.6

2

57c

57

31

34    33    45    32    36

**FIG.7**

**FIG.8**

FIG.9

# FIG.10

# FIG.11

# F I G. l2